# EUROPÄISCHE PATENTANMELDUNG

(11) **EP 1 628 262 A2**
(43) Veröffentlichungstag der Anmeldung: **22.02.2006**
(21) Anmeldenummer: 05016829.3
(22) Anmeldetag: 03.08.2005
(51) Int. Cl.: G06T 15/20, G06T 17/50

(54) **Verfahren und Vorrichtung zur Darstellung einer dreidimensionalen Topographie**

(30) Priorität: 20.08.2004 DE 102004040372
(71) Anmelder: Diehl Avionik Systeme GmbH, 88662 Überlingen (DE)
(72) Erfinder: Langer, Boris, 60439 Frankfurt (DE)
(74) Vertreter: Diehl Patentabteilung

(57) **Zusammenfassung**

Es werden ein Verfahren und eine Vorrichtung (10) zur zweidimensionalen Darstellung einer dreidimensionalen Topographie angegeben. Hierbei werden nach dem Verfahren zur zweidimensionalen Darstellung einer dreidimensionalen Topographie, wobei aus Topographiedaten, die die dreidimensionale Topographie beschreiben und aus Lichteinfallsdaten, die einen vorgegebenen Lichteinfall vektoriell beschreiben, Abbildungsdaten ermittelt und diese als zweidimensionales schattiertes Bild (12) dargestellt, wobei die Topographiedaten Daten von Einzelflächen und Daten zur Orientierung der Einzelflächen enthalten, und wobei für jede Einzelfläche aus den Daten zur Orientierung jeweils eine zugeordnete Textur, die die Anzeige eines Musters beschreibt, berechnet, die Textur in Abhängigkeit von den Lichteinfallsdaten gewichtet und aus den gewichteten Texturen als Abbildungsdaten das zweidimensionale Bild (12) der dreidimensionalen Topographie zusammengesetzt wird.

## Beschreibung

Die Erfindung betrifft ein Verfahren zur zweidimensionalen Darstellung einer dreidimensionalen Topographie unter Verwendung von Texturen sowie eine Vorrichtung zur zweidimensionalen Darstellung einer dreidimensionalen Topographie unter Verwendung von Texturen.

Bisher verwendete Verfahren zur digitalen Kartendarstellung bilden Geländedaten mittels eines komplexen Netzes aus Dreiecken ab. Hierzu ist sowohl die Berechnung einer jeden der drei Ecken als auch die Berechnung der jeweiligen Flächennormalen für jedes der das Netz bildenden Dreiecke erforderlich. Die Berechnung einer Beleuchtung sowie die Berechnung der Projektion der Dreiecke erfolgt über die Funktionen der Graphikkarte. Soll jedoch ein Gelände in einer hohen Auflösung dargestellt werden, stoßen selbst moderne Graphikkarten unter Verwendung solcher Berechnungsverfahren an ihre Leistungsgrenze. Dies tritt besonders dann auffällig in Erscheinung, wenn eine Darstellung mit hoher Auflösung gefordert ist und die Veränderung der Darstellung in Echtzeit erfolgen soll, wie es für Navigationshilfen in der Luftfahrt zweckmäßig ist.

In der EP 1 202 222 A1 wird ein Verfahren zur Echtzeitdarstellung vorgeschlagen, bei dem auf gespeicherte Texturen zurückgegriffen wird. Dieses Verfahren wurde für die Darstellung von Oberflächen in animierten Videospielen oder in computeranimierten Trickfilmen entwickelt. Für eine derartige Anwendung ist es erforderlich, dass die darzustellenden Gegenstände oder Personen möglichst realitätsnah wiedergegeben werden, um den Eindruck einer künstlichen Darstellung weitestgehend zu vermeiden. Um eine naturgetreue Darstellung der Animation zu gewährleisten, ist für jeden Rechenschritt die Verwendung einer bidirektionalen Reflektionsverteilungsfunktion (BRDF) erforderlich, die das natürliche Reflexionsvermögen der jeweiligen Oberfläche imitiert. Diese Berechnungsmethode ist jedoch aufwendig und birgt daher insbesondere für Darstellungen in sicherheitsrelevanten Systemen wie für Navigationshilfen in der Luftfahrt die Gefahr von möglichen überflüssigen Fehlerquellen.

In Erkenntnis dieser Gegebenheiten liegt vorliegender Erfindung deshalb die Problemstellung zugrunde, ein Verfahren und eine Vorrichtung zur echtzeitlichen Darstellung dreidimensionaler Topographien für sicherheitsrelevante Systeme bereitzustellen, wodurch die Darstellung der Topographie in Echtzeit mit gegenüber dem Stand der Technik geringerem Aufwand möglich ist.

Die erstgenannte Aufgabe hinsichtlich eines Verfahrens wird erfindungsgemäß gelöst durch ein Verfahren zur zweidimensionalen Darstellung einer dreidimensionalen Topographie, wobei aus Topographiedaten, die die dreidimensionale Topographie beschreiben und aus Lichteinfallsdaten, die einen vorgegebenen Lichteinfall vektoriell beschreiben, Abbildungsdaten ermittelt und diese als zweidimensionales schattiertes Bild dargestellt werden, wobei die Topographiedaten Daten von Einzelflächen und Daten zur Orientierung der Einzelflächen enthalten, und wobei für jede Einzelfläche aus den Daten zur Orientierung jeweils eine zugeordnete Textur, die die Anzeige eines Musters beschreibt, berechnet, die Textur in Abhängigkeit von den Lichteinfallsdaten gewichtet und aus den gewichteten Texturen als Abbildungsdaten das zweidimensionale Bild der dreidimensionalen Topographie zusammengesetzt wird.

Mit anderen Worten wird eine dreidimensionale Topographie, wie beispielsweise ein Gelände, zweidimensional dargestellt. Hierfür wird aus Daten, welche die dreidimensionale Topographie charakteristisch beschreiben, wenigstens eine Textur berechnet und diese wenigstens eine Textur mit einem Lichteinfallsvektor gewichtet, wodurch insbesondere eine Beleuchtungsintensität für die Topographie ermittelt wird, so dass das Gelände zweidimensional in Form eines schattierten Bildes dargestellt wird.

Aus den Topographiedaten und den Lichteinfallsdaten werden Abbildungsdaten ermittelt, aus denen das zweidimensionale Bild der dreidimensionalen Topographie zusammengesetzt wird. Dabei ergibt sich aufgrund der simulierten Beleuchtung eine Plastizität der Darstellung, das zweidimensionale Bild erscheint dreidimensional (2,5D-Darstellung), beispielsweise in Form einer Hell-Dunkel-Darstellung. Für bestimmte Anwendungen, wie beispielsweise 2,5D-Darstellungen, kann die z-Komponente der Flächennormalen vernachlässigt werden.

Mit dem genannten Verfahren zur zweidimensionalen Darstellung einer dreidimensionalen Topographie, beispielsweise eines Geländes, wird einem Piloten auf einem Navigationsdisplay eine Darstellung des ihn umgebenden Geländereliefs zur Verfügung gestellt, wodurch dem Piloten eine verbesserte Beurteilung seiner Umgebung erlaubt wird. Eine solche Darstellung ist insbesondere dann hilfreich, wenn mit hohen Fluggeschwindigkeiten, bei schlechten Sichtverhältnissen sowie im Tiefflug durch schwieriges Gelände, beispielsweise in Tälern, zu navigieren ist.

Für die Darstellung der Daten genügt ein flaches Geländemodell, da die dreidimensionale Topographie nur aus der Vogelperspektive zu sehen ist und der plastische Eindruck der Darstellung ausschließlich durch eine simulierte Beleuchtung erzeugt wird, die eine schattierte Geländedarstellung bewirkt. In einer solchen Darstellung werden Seiten von Erhebungen, die der Lichtquelle abgewandt sind, dunkler dargestellt als die der Lichtquelle zugewandten Seiten.

Zur Beschreibung des darzustellenden Geländes, also der dreidimensionalen Topographie, werden charakteristische Topographiedaten, insbesondere kartographische Daten, verwendet. Kartographisch ist es üblich die Erdoberfläche in nicht überlappende Bereiche gleicher Kantenlänge lückenlos zu unterteilen, wobei jeder Bereich durch die geographische Länge und Breite seiner südwestlichen Ecke eindeutig identifiziert ist. Die Identifizierung der Bereiche ist jedoch ebenfalls durch andere charakteristische Punkte möglich. Als Kantenlänge eines Bereichs haben sich 300 Bogensekunden bewährt, was im europäischen Raum ungefähr 4 nautischen Meilen entspricht.

Je einem der nicht überlappenden Bereiche der Erdoberfläche wird eine so genannte Kachel zugeordnet, die in tabeliarischer Form den Höhenwert eines jeden erfassten Geländepunkts sowie dessen Abstand zu den erfassten benachbarten Geländepunkten innerhalb des abgebildeten Bereichs der Erdoberfläche bzw. des Geländes enthalten.

Aus solchen Kacheln können die Topographiedaten teilweise direkt entnommen, teilweise aus den erfassten Informationen berechnet werden. Hierzu wird für jeden Geländepunkt, der die Lage einer Fläche vorgegebener Größe angibt, eine Verbindungslinie zu jedem unmittelbar benachbarten Nachbargeländepunkt errechnet und jeweils die Normale dieser Verbindungslinien berechnet. Der Mittelwert dieser Normalen der Verbindungslinien ergibt die Flächennormale des Geländepunktes, welche die Orientierung des Geländepunkts beschreibt. In Verbindung mit dem Abstand zwischen benachbarten Geländepunkten stellen die Flächennormalen die für das Verfahren erforderlichen Topographiedaten dar, die in einer Datenbank abgelegt werden. Die Abbildung des zu beschreibenden Geländes wird aus den durch die Geländepunkte definierten Einzelflächen und deren Daten zur Orientierung zusammengesetzt.

Die zweitgenannte Aufgabe hinsichtlich einer Vorrichtung wird erfindungsgemäß gelöst durch eine Vorrichtung zur zweidimensionalen Darstellung einer dreidimensionalen Topographie mit einer Anzeigeeinheit, einem Bilderzeugungsmittel und einer Steuerungseinheit, wobei die Steuerungseinheit aus Lichteinfallsdaten, die einen vorgegebenen Lichteinfall vektoriell beschreiben und aus Topographiedaten, die die dreidimensionale Topographie beschreiben, Abbildungsdaten ermittelt und diese als zweidimensionales schattiertes Bild dargestellt werden, wobei die Topographiedaten Daten von Einzelflächen und Daten zur Orientierung der Einzelflächen enthalten, und wobei für jede Einzelfläche aus den Daten zur Orientierung in Abhängigkeit von den Lichteinfallsdaten jeweils eine zugeordnete Textur, die die Anzeige eines Musters beschreibt, berechnet, die Textur in Abhängigkeit von den Lichteinfallsdaten gewichtet und aus den gewichteten Texturen als Abbildungsdaten das zweidimensionale Bild der dreidimensionalen Topographie zusammengesetzt wird.

Mit anderen Worten ist eine Vorrichtung zur zweidimensionalen Darstellung einer dreidimensionalen Topographie, einzusetzen, die eine Anzeigeeinheit, wie beispielsweise ein Display, ein Bilderzeugungsmittel, wie beispielsweise eine Graphikkarte und eine Steuerungseinheit, wie beispielsweise einen Rechner umfasst, wobei die Vorrichtung nach dem erfindungsgemäßen Verfahren zur Darstellung der Topographie Abbildungsdaten ermittelt und aus diesen ein zweidimensionales schattiertes Bild darstellt.

In einer vorteilhaften Weiterbildung werden aus den Daten zur Orientierung der Einzelflächen jeweils die drei Raumkomponenten der Flächennormale entnommen oder berechnet, und die Abbildungsdaten für eine Einzelfläche durch Bilden des Skalarprodukts zwischen Flächennormale und Lichteinfallsvektor berechnet. Alternativ wird die Bildung des Skalarprodukts durch ein Blending-Verfahren zur gewichteten Überblendung von Texturen simuliert.

Die Abbildungsdaten, insbesondere die Beleuchtungsintensität, können durch das Bilden des Skalarprodukts zwischen Flächennormale und Lichteinfallsvektor mathematisch abgebildet werden, wobei der zwischen beiden Vektoren aufgespannte Winkel die Beleuchtungsintensität beschreibt. Je größer der Winkel, desto schwächer ist die Beleuchtungsintensität.

Um eine Beleuchtung des abzubildenden Geländes zu simulieren, werden Lichteinfallsdaten verwendet, die bevorzugt durch den Lichteinfallsvektor beschrieben werden und dazu das Skalarprodukt mit den aus der Datenbank entnommenen Topographiedaten, insbesondere den Flächennormalen, gebildet. Innerhalb einer jeden durch die Geländepunkte definierten Einzelfläche wird ein identischer Wert berechnet. Weist eine Flächennormale in Richtung des Lichteinfallsvektors, entspricht dies einer Reflexion des Lichts an dem jeweiligen Geländepunkt. Zweckmäßiger Weise wird ein solcher Geländepunkt hell dargestellt.

In einer bevorzugten Alternative werden die Abbildungsdaten durch Simulation des Skalarprodukts ermittelt. Hierzu werden die Topographiedaten aus der Datenbank entnommen, mittels einer visuell wahrnehmbaren Verschlüsselung kodiert und in Form von Texturen hinterlegt, deren Erstreckung der der jeweils zugrunde liegenden Kachel bzw. dem Bereich der Erdoberfläche entspricht. Unter einer Textur wird eine optisch gestaltete Fläche bzw. ein Muster verstanden. Die Kodierung erfolgt so, dass die Raumrichtungen der Flächennormalen separierbar sind, wobei die bevorzugte Kodierung jedoch für jede Raumrichtung separat erfolgt, also je eine Textur für die x-, y- und z-Komponente der Flächennormalen berechnet wird. Innerhalb einer jeden Einzelfläche ist die Kodierung identisch.

Die Lichteinfallsdaten, insbesondere der Lichteinfallsvektor, werden für das Blending-Verfahren in Abhängigkeit von der Einfallsrichtung des Lichtes, in ihre Raumkomponenten zerlegt und die Anteile der Raumkomponenten am Lichteinfallsvektor ermittelt. Zur Darstellung eines stationären bzw. des aktuellen zweidimensionalen Bildes ist nur ein einziger Lichteinfallsvektor nebst den daraus ermittelten Anteilen der Raumkomponenten erforderlich. Mit diesen Anteilen werden dann alle Topographiedaten des aktuellen zweidimensionalen Bildes gewichtet. Weist eine Flächennormale in Richtung des Lichteinfallsvektors, entspricht dies einer Reflexion des Lichts an dem jeweiligen Geländepunkt und nach der Kodierung wird dieser Geländepunkt hell dargestellt.

Zur Durchführung des Blending-Verfahrens werden die eine Flächennormale beschreibenden Texturen mit den Anteilen der Raumkomponenten am aktuellen Lichteinfallsvektor gewichtet. Hat der Lichteinfallsvektor beispielsweise eine große x-Komponente aber eine kleine y-Komponente, fließt die Textur der x-Komponente der Flächennormalen mit einem größeren Anteil in das Bild ein als die Textur der y-Komponente, die Texturen werden gewichtet übereinander geblendet. Das Überblenden der Texturen kann als übereinander legen der optisch gestalteten Flächen aufgefasst werden, was durch einfache Rechenoperationen wie Addition oder Multiplikation umzusetzen ist. Dieses "Blending" erfolgt in der Graphikkarte, erfordert einen besonders geringen Rechenaufwand und belastet daher vorteilhafter Weise die CPU des Systems nicht.

In einer weiteren Ausführungsform ist die Orientierung der Einzelflächen in den Texturdaten als Farbcode abgelegt.

Somit erfolgt die Verschlüsselung der in den Texturen hinterlegten Informationen, insbesondere für die Orientierung der Einzelflächen, in Form von Farbwerten, die unter Einsatz des Blending-Verfahrens besonders einfach überlagerbar und damit durch Addition mischbar sind, wodurch die gespeicherten Informationen eindeutig wiedergegeben werden können. Hierfür kann ein Farbcode verwendet werden, in bevorzugter Weise mit Rot-, Grün- und Blauwert. Durch die Überlagerung dieser Farben ergibt sich als Abbildung für die zweidimensionale Darstellung ein Graustufenbild.

Vorteilhafter Weise wird die Orientierung der Abbildung des zweidimensionalen Bildes in Relation zur Orientierung eines Betrachters bezüglich der dreidimensionalen Topographie nachgeführt.

Mit anderen Worten wird, um die Orientierung eines Piloten im Gelände zu vereinfachen, die Orientierung der Abbildung des zweidimensionalen Bildes, also der digitalen Karte, in Relation zur Orientierung des Betrachters bezüglich der dreidimensionalen Topographie nachgeführt. Es wird also die Kartendarstellung stets in Flugrichtung eines Luftfahrzeugs ausgerichtet und nachgeführt.

Die Darstellung des Geländes auf einer Anzeigeeinheit, z. B. einem Navigationsdisplay, kann auch aus den Daten mehrerer Kacheln zusammengesetzt werden, wobei die Darstellung des Geländes durch Texturen über die Abbildungsfläche der Anzeigeeinheit hinaus um wenigstens eine Reihe Kacheln im Speicher der Graphikkarte vorgehalten werden kann, damit am Rand der Abbildungsfläche bei der Nachführung bzw. Aktualisierung der Kartendarstellung keine Lücken entstehen. Das Zentrum der Anzeigeeinheit kann mit den im Zentrum dargestellten Topographiedaten in Korrelation gesetzt werden, wobei die eindeutige Identifizierung der Topographiedaten im Zentrum über die ihnen zugrunde liegende Kachel erfolgen kann. Bewegt sich das Luftfahrzeug über den Rand der mit dem Zentrum korrelierten Kachel hinweg, kann eine neue Korrelation mit der dann dem Zentrum zugrunde liegenden Kachel erfolgen. Darüber hinaus kann an die Reihe der bisher jenseits des Randes der Abbildungsfläche vorgehaltenen Kacheln bzw. deren Abbildungsdaten die daran anschließende Reihe Kacheln verfahrensgemäß bearbeitet und im Speicher der Graphikkarte die zugehörigen Abbildungsdaten vorgehalten werden. Auf diese Weise ist es möglich die Kartendarstellung in Flugrichtung nachzuführen.

Damit nur eine einzige Reihe Kacheln bzw. deren Abbildungsdaten jenseits des Randes der Abbildungsfläche vorgehalten werden und so der Speicherbedarf reduziert werden kann, ist es möglich die entgegen der Flugrichtung vorgehaltene Reihe Kacheln bzw. deren Abbildungsdaten nach oder während der Nachführung der Kacheln in Flugrichtung aus dem Speicher zu löschen. Die Daten können über ein Netzwerk oder einen Datenbus übertragen werden.

Zweckmäßiger Weise wird der Lichteinfallsvektor derart gewählt, dass seine Richtung bezüglich der Orientierung des Betrachters in der Abbildung des zweidimensionalen Bildes stets von oben nach unten oder schräg von oben nach unten zeigt.

Durch die Orientierung des Lichteinfallsvektors wird einem Betrachter eine Beleuchtung des zweidimensionalen Bildes "von oben" suggeriert. Durch diese "von oben kommende Beleuchtung" der dreidimensionalen Topographie wird sichergestellt, dass das menschliche Auge das im Schattenwurf dargestellte Gelände so wahrnimmt, dass Erhebungen als Erhebung und Senken als Senke wahrgenommen werden. Bei einer statischen Beleuchtung, insbesondere dann, wenn die Beleuchtung "von unten käme", würde aufgrund der intrinsischen Eigenschaften des menschlichen Auges und der Verarbeitung der Informationen im Gehirn Erhebungen als Senke und Senken als Erhebung beurteilt werden. Dieser Effekt wird auch als so genannter Umklappeffekt bezeichnet.

Um eine Täuschung des Betrachters durch den Umklappeffekt sicher auszuschließen, wird der Lichteinfallsvektor ebenfalls der Bewegung des Betrachters der Abbildung im Gelände stets so nachgeführt, dass in der Abbildung des zweidimensionalen Bildes die fiktive Beleuchtung durch den Lichteinfallsvektor von oben nach unten oder schräg von oben nach unten erfolgt.

In einer weiteren Ausgestaltung des Verfahrens werden die Höhenwerte der Einzelflächen der Topographie als zusätzliche Texturdaten hinterlegt.

Die in den Kacheln hinterlegten Höhenwerte der Geländepunkte werden in einer Textur kodiert, wobei für die Höhenwerte eine einzige Textur mit nur einer Komponente ausreichend ist. Auf diese Weise können die Höheninformationen besonders vorteilhaft, ohne zusätzlichen Verfahrensschritt, bereits während der Simulation des Skalarprodukts durch "Blending" in die Abbildungsdaten eingearbeitet und dem Piloten zur Verfügung gestellt werden. Besonders vorteilhaft ist die Verwendung einer Alpha-Textur. Es ist jedoch auch eine Textur entsprechend der Kodierung der Flächennormalen möglich.

Vorteilhafter Weise sind die zusätzlichen Texturdaten als Alpha-Werte oder als Farbcodes abgelegt.

Auf diese Weise lassen sich die zusätzlichen Texturdaten der Höhenwerte, die mit dem gleichen Farbkode verschlüsselt sind, wie die übrigen Texturen, beim Überblenden den Abbildungsdaten effektiv hinzufügen.

In einer besonders vorteilhaften Weiterbildung des Verfahrens wird die vertikale Position des Betrachters des zweidimensionalen schattierten Bildes über der dreidimensionalen Topographie mit Höhenwerten der Topographie verglichen, und bei Übereinstimmung oder Abweichung werden die Bereiche der Topographie mit übereinstimmendem und/oder abweichendem Höhenwert mit wenigstens einer visuellen Markierung gekennzeichnet.

Für die Navigation in schwierigem Gelände, beispielsweise während des Landeanflugs oder im Tiefflug, ist die Durchführung eines Vergleichs der vertikalen Position des Betrachters über der dreidimensionalen Topographie, also der Flughöhe, mit den Höhenwerten des Geländes sowie das Anzeigen übereinstimmender bzw. abweichender Werte in der zweidimensionalen Darstellung sinnvoll. Der Vergleich der Flughöhe mit niedrigeren bzw. höheren Gebieten kann beispielsweise mittels Alpha-Test durchgeführt werden. Hierbei wird die Filterfunktion einer Graphikkarte verwendet, die aus den in der Alpha-Textur hinterlegten Höhenwerten solche Höhenwerte auswählt, die über einem bestimmten Grenzwert liegen. Ein solcher wählbarer Grenzwert könnte beispielsweise die aktuelle Flughöhe sein. In Folge dessen würden nur die Gebiete dargestellt werden, die der Filterregel entsprechen, also, die beispielsweise höher sind als die aktuelle Flughöhe. Durch die Verwendung verschiedener Grenzwerte lassen sich Abstufungen der Höhenwerte auch in einer Abbildung darstellen.

Die übereinstimmenden bzw. abweichenden Werte können durch zumindest eine visuelle Markierung angezeigt werden, beispielsweise durch Einfärben. So können z. B. die Geländeerhebungen im zweidimensionalen Bild rot eingefärbt werden, die, unter Berücksichtigung von Sicherheitstoleranzen, der Flughöhe entsprechen oder höher als diese sind. Auf diese Weise kann, gegebenenfalls unter Einsatz weiterer Warnfunktionen wie Signaltönen oder Textmeldungen, der Pilot vor umgebendem Gelände gewarnt werden, mit dem das Luftfahrzeug unter Beibehaltung der Flughöhe oder der Flugrichtung kollidieren könnte. Die visuelle Markierung kann jedoch auch so ausgestaltet sein, dass die zu- oder abnehmende Höhe der Geländeerhebung durch eine abgestufte Farbgebung angezeigt wird.

In einer Weiterbildung werden die Abbildungsdaten des zweidimensionalen schattierten Bildes in unterschiedlichen Auflösungen berechnet und vorgehalten. Hierdurch können bei Bedarf auch höhere Vergrößerungen des Geländes sofort angezeigt und zwischen unterschiedlichen Vergrößerungsstufen umgeschaltet werden.

Durch den beispielsweise in den Kacheln gespeicherten Abstand benachbarter Geländepunkte voneinander ist die Vergrößerung bzw. die Detailstufe des zweidimensionalen Bildes festgelegt. Zur Darstellung unterschiedlicher Detailstufen, wird jede darzustellende Vergrößerung der Topographiedaten verfahrensgemäß aufbereitet und dann entsprechend vorgehalten.

Für die Darstellung auf der Anzeigeeinheit ist es üblich eine konstante Abbildungsfläche zu verwenden, die beispielsweise durch 1024 Pixel abgedeckt wird. Mit zunehmender Vergrößerung kann beispielsweise von einer Darstellung eines abgebildeten Geländes, das sich über 128x128 Nautischen Meilen (nm) erstreckt, über 64x64 nm zu 32x32 nm bis auf eine Detailstufe des Geländes von 16x16 nm gezoomt werden. Zwischen den unterschiedlichen Vergrößerungen kann insbesondere dann verzögerungsfrei hin- und hergeschaltet werden, wenn jede darstellbare Detailstufe vorgehalten wird. Dies erfolgt zweckmäßiger Weise in einer Texturpyramide. Es hat sich als besonders vorteilhaft erwiesen, wenn die Datenmenge in jeder unterschiedlichen Detailstufe identisch ist. Wenn also die Datendichte der nächst höheren Vergrößerungsstufe im Vergleich zur Datendichte der vorhergehenden Vergrößerungsstufe doppelt so hoch ist bzw. sich die Datendichte beim herauszoomen aus der vorhergehenden größeren Vergrößerung halbiert. Als Folge dessen ist der Speicherbedarf exakt vorhersehbar. Somit lassen sich die Kosten auf das nur unbedingt erforderliche Maß reduzieren. Die Nachführung der Kartendarstellung wird, wie beschrieben, für jede Vergrößerung unabhängig durchgeführt.

Ein Ausführungsbeispiel wird anhand der Zeichnung und anhand der nachstehenden Beschreibung näher erläutert.

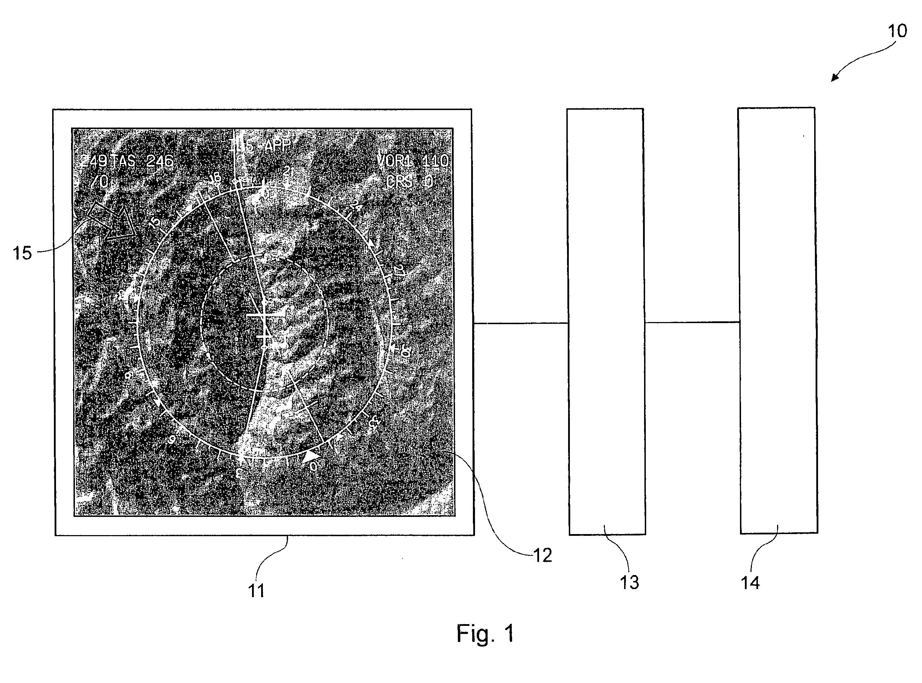

- Fig. 1: Blockschaltbild einer Vorrichtung zur zweidimensionalen Darstellung einer dreidimensionalen Topographie.

Figur 1 zeigt in Form eines Blockschaltbildes eine Vorrichtung 10 zur zweidimensionalen Darstellung einer dreidimensionalen Topographie. Die Vorrichtung 10 umfasst eine Anzeigeeinheit 11, ein Bilderzeugungsmittel 13 und eine Steuerungseinheit 14, wobei die Anzeigeeinheit 11 eine nach dem Verfahren aufbereitete Topographie in Form eines zweidimensionalen schattierten Bildes 12 abbildet.

Das Bild 12 zeigt ein Gelände mit Höhenzügen und Tälern in Hell-Dunkel-Darstellung. Die Beleuchtung der Topographie wird in vorliegendem Beispiel durch einen schräg von oben nach unten weisenden Lichteinfallsvektor simuliert, der durch einen Pfeil 15 angedeutet ist.

## Patentansprüche

1. Verfahren zur zweidimensionalen Darstellung einer dreidimensionalen Topographie, wobei aus Topographiedaten, die die dreidimensionale Topographie beschreiben und aus Lichteinfallsdaten, die einen vorgegebenen Lichteinfall vektoriell beschreiben, Abbildungsdaten ermittelt und diese als zweidimensionales schattiertes Bild (12) dargestellt werden, wobei die Topographiedaten Daten von Einzelflächen und Daten zur Orientierung der Einzelflächen enthalten, und wobei für jede Einzelfläche aus den Daten zur Orientierung jeweils eine zugeordnete Textur, die die Anzeige eines Musters beschreibt, berechnet, die Textur in Abhängigkeit von den Lichteinfallsdaten gewichtet und aus den gewichteten Texturen als Abbildungsdaten das zweidimensionale Bild (12) der dreidimensionalen Topographie zusammengesetzt wird.

2. Verfahren nach Anspruch 1,
**dadurch gekennzeichnet,**
**dass** aus den Daten zur Orientierung der Einzelflächen jeweils die drei Raumkomponenten der Flächennormale entnommen oder berechnet werden, und die Abbildungsdaten für eine Einzelfläche entweder durch Bilden des Skalarprodukts zwischen Flächennormale und Lichteinfallsvektor berechnet werden oder zur Simulation der Bildung des Skalarprodukts ein Blending-Verfahren zur gewichteten Überblendung von Texturen verwendet wird.

3. Verfahren nach einem der vorhergehenden Ansprüche,
**dadurch gekennzeichnet,**
**dass** die Orientierung der Einzelflächen in den Texturdaten als Farbcode abgelegt ist.

4. Verfahren nach einem der Ansprüche 1 bis 3,
**dadurch gekennzeichnet,**
**dass** die Orientierung der Abbildung des zweidimensionalen Bildes (12) in Relation zur Orientierung eines Betrachters bezüglich der dreidimensionalen Topographie nachgeführt wird.

5. Verfahren nach Anspruch 4,
**dadurch gekennzeichnet,**
**dass** der Lichteinfallsvektor derart gewählt ist, dass seine Richtung bezüglich der Orientierung des Betrachters in der Abbildung des zweidimensionalen Bildes (12) stets von oben nach unten oder schräg von oben nach unten zeigt.

6. Verfahren nach einem der Ansprüche 1 bis 5,
**dadurch gekennzeichnet,**
**dass** die Höhenwerte der Einzelflächen der Topographie als zusätzliche Texturdaten hinterlegt werden.

7. Verfahren nach einem der Ansprüche 1 bis 6,
**dadurch gekennzeichnet,**
**dass** die zusätzlichen Texturdaten als Alpha-Werte oder als Farbcodes abgelegt sind.

8. Verfahren nach Anspruch 6 oder Anspruch 7,
**dadurch gekennzeichnet,**
**dass** die vertikale Position des Betrachters des zweidimensionalen schattierten Bildes (12) über der dreidimensionalen Topographie mit Höhenwerten der Topographie verglichen wird, und bei Übereinstimmung oder Abweichung die Bereiche der Topographie mit übereinstimmendem und/oder abweichendem Höhenwert mit wenigstens einer visuellen Markierung **gekennzeichnet** werden.

9. Verfahren nach einem der Ansprüche 1 bis 8,
**dadurch gekennzeichnet,**
**dass** die Abbildungsdaten des zweidimensionalen schattierten Bildes (12) in unterschiedlichen Auflösungen berechnet und vorgehalten werden.

10. Vorrichtung (10) zur zweidimensionalen Darstellung einer dreidimensionalen Topographie, insbesondere gemäß einem Verfahren nach einem der Ansprüche 1 bis 9, mit einer Anzeigeeinheit (11), einem Bilderzeugungsmittel (12) und einer Steuerungseinheit (14), wobei die Steuerungseinheit (14) aus Lichteinfallsdaten, die einen vorgegebenen Lichteinfall vektoriell beschreiben und aus Topographiedaten, die die dreidimensionale Topographie beschreiben, Abbildungsdaten ermittelt und diese als zweidimensionales schattiertes Bild (12) dargestellt werden, wobei die Topographiedaten Daten von Einzelflächen und Daten zur Orientierung der Einzelflächen enthalten, und wobei für jede Einzelfläche aus den Daten zur Orientierung in Abhängigkeit von den Lichteinfallsdaten jeweils eine zugeordnete Textur, die die Anzeige eines Musters beschreibt, berechnet, die Textur in Abhängigkeit von den Lichteinfallsdaten gewichtet und aus den gewichteten Texturen als Abbildungsdaten das zweidimensionale Bild (12) der dreidimensionalen Topographie zusammengesetzt wird.
